# EUROPÄISCHE PATENTSCHRIFT

(11) **EP 3 652 001 B1**
(45) Veröffentlichungstag und Bekanntmachung des Hinweises auf die Patenterteilung: **08.09.2021**
(21) Anmeldenummer: 18746114.0
(22) Anmeldetag: 13.07.2018
(51) Int. Cl.: B60C 29/00, B60C 29/04, F16K 15/20, C08G 18/08, C08G 18/32, C08G 18/48, C08G 18/66, C08G 18/76

(54) **VENTILSCHAFT AUS THERMOPLASTISCHEM MATERIAL**
VALVE STEM MADE FROM THERMOPLASTIC MATERIAL
TIGE DE SOUPAPE EN MATÉRIAU THERMOPLASTIQUE

(30) Priorität: 14.07.2017 EP 17181469
(43) Veröffentlichungstag der Anmeldung: 20.05.2020
(73) Patentinhaber: BASF SE, 67056 Ludwigshafen am Rhein (DE); Schwalbe-Ralf Bohle GmbH, 51580 Reichshof (DE)
(72) Erfinder: OTTENS, Mark, 49448 Lemfoerde (DE); HENZE, Oliver Steffen, 49448 Lemfoerde (DE); SCHAEFERMEIER, Felix, 51580 Reichshof (DE)
(74) Vertreter: Altmann Stößel Dick Patentanwälte PartG mbB
(86) Internationale Anmeldenummer: PCT/EP2018/069130
(87) Internationale Veröffentlichungsnummer: WO 2019/012126

(56) Entgegenhaltungen:
- EP-A1- 2 857 226
- EP-A2- 0 211 301
- EP-A2- 1 826 225
- WO-A1-2006/074997
- WO-A1-2013/189890
- DE-U1- 8 516 229

## Beschreibung

Die vorliegende Erfindung betrifft ein Ventil für einen Fahrzeugreifen, insbesondere einen Fahrradreifen, umfassend einen rohrförmigen Schaft, wobei der Schaft aus einer Zusammensetzung (Z1) enthaltend einen thermoplastischen Kunststoff (P1) und einen Füllstoff (F1) besteht, sowie einen Ventilschaft zur Herstellung eines Ventils für einen Fahrzeugreifen, wobei der Ventilschaft rohrfömig ist aus einer Zusammensetzung (Z1) enthaltend einen thermoplastischen Kunststoff (P1) und einen Füllstoff (F1) besteht. Weiterhin betrifft die vorliegende Erfindung die Verwendung des erfindungsgemäßen Ventils zur Herstellung eines Formkörpers umfassend einen aufblasbaren Schlauchabschnitt, insbesondere einen Innenschlauch für einen Fahrzeugreifen, sowie die Verwendung des erfindungsgemäßen Ventils zur Herstellung eines schlauchlosen Fahrradreifens.

Schläuche für Fahrzeugreifen, beispielsweise Fahrradreifen, werden üblicherweise auf Basis von Kautschuk gefertigt. In Fahrzeugreifen eingesetzte Schlauchsysteme umfassen herkömmlicherweise Gummi- bzw. Latexschläuche, die in Ringform gegossen oder deren Enden miteinander verklebt sind, und die eine Wandstärke zwischen 0,1 mm und 3 mm aufweisen. Daneben sind Schläuche bekannt, die aus thermoplastischen Kunststoffen hergestellt sind, beispielsweise aus thermoplastischem Polyurethan. Letztere zeichnen sich dadurch aus, dass sie gegenüber Schläuchen auf Kautschuk-Basis höher belastbar sind und aufgrund reduzierter Wandstärken deutlich weniger Gewicht aufweisen. Allerdings sind sie derzeit in der Herstellung noch erheblich teurer als Schläuche auf Kautschuk-Basis. Beispielsweise die WO 2010/089080 A1 offenbart ein Schlauchsystem, insbesondere ein Schlauchsystem für Fahrzeugreifen sowie Verfahren zur Herstellung der Schläuche. Dabei werden gemäß der WO 2010/089080 A1 Schläuche mittels Extrusion hergestellt und auf die entsprechende Länge gekürzt. Die Enden der Schläuche werden dann zu einem ringförmigen Schlauch verschweißt.

Aus der WO 2013/189890 A1 ist weiterhin bekannt, dass auch die Ventile mit Schäften aus thermoplastischen Kunststoffen gefertigt werden können.

Bekannte Ventile aus thermoplastischen Kunststoffen haben jedoch den Nachteil, dass sich bei höheren oder niedrigeren Temperaturen die Materialeigenschaften verschlechtern. So wurde gefunden, dass ein Schaft aus thermoplastischem Polyurethan bei höheren Temperaturen, die zum Beispiel bei Bergabfahrten und dem damit verbundenen Bremsen entstehen, versagt und es bei Hitze zu einer Verformung und damit Undichtigkeit des Ventils kommen kann. Auch bei niedrigen Temperaturen kann sich das Material zusammenziehen, was zu einer Verformung des Ventilschafts führen kann.

Weiterhin kann es bei bekannten Ventilen aus thermoplastischen Kunststoffen beim sogenannten "Reifenwandern", das bei starken Bremsprozessen auftreten kann, bei dem der Reifen seine Position auf der Felge verlässt, zu einer Krafteinwirkung auf den Ventilschaft kommen kann, die zu einer Verformung des Ventils führen kann.

Es wurde auch beobachtet, dass es beim Aufpumpen zu hohen mechanischen Belastungen kommt und auch hier ein Schaft aus einem thermoplastischen Kunststoff in bestimmten Fällen, beispielsweise aufgrund eines zu schlechten Rückstellvermögens oder Biegeverhaltens, versagen kann.

Darüber hinaus wurde festgestellt, dass es bei bekannten Ventilen aus thermoplastischen Kunststoffen, die eine glatte Oberflächenstruktur aufweisen, zu einer unzureichenden Haftung zwischen Schaft und Luftpumpenkopf kommen kann. Bei der Befüllung mit Hochdrücken (>6bar) springt der Luftpumpenkopf, der mehrheitlich mittels Klemmmechanismus fixiert wird, von dem Ventilschaft. Die Luftbefüllung wird dementsprechend erschwert.

Ausgehend vom Stand der Technik lag eine Aufgabe der vorliegenden Erfindung daher darin, ein Ventil für einen Fahrzeugreifen bereit zu stellen, das einfach hergestellt werden kann, gut an einem Schlauchabschnitt befestigt werden kann und gute mechanische Eigenschaften in weiten Temperaturbereichen aufweist. Eine weitere Aufgabe der vorliegenden Erfindung war es, ein Ventil für einen Fahrzeugreifen bereit zu stellen, das auch bei höherem Druck gut befüllt werden kann.

Diese Aufgabe wird erfindungsgemäß durch ein Ventil für einen Fahrzeugreifen umfassend einen rohrförmigen Schaft gelöst, wobei der Schaft aus einer Zusammensetzung (Z1) enthaltend einen thermoplastischen Kunststoff (P1) und einen Füllstoff (F1) besteht. Die vorliegende Erfindung betrifft auch einen Ventilschaft zur Herstellung eines Ventils für einen Fahrzeugreifen, wobei der Ventilschaft rohrfömig ist und aus einer Zusammensetzung (Z1) enthaltend einen thermoplastischen Kunststoff (P1) und einen Füllstoff (F1) besteht.

Bei dem Ventil für einen Fahrzeugreifen handelt es sich im Rahmen der vorliegenden Erfindung insbesondere um ein Ventil für einen Fahrradreifen.

Erfindungsgemäß besteht der Ventilschaft aus einer Zusammensetzung (Z1), die einen thermoplastischen Kunststoff (P1) und einen Füllstoff (F1) enthält.

Überraschend hat sich gezeigt, dass bei der Verwendung eines derartigen Ventilschafts ein Ventil erhalten wird, das zum einen über eine ausreichende Stabilität und gute mechanische Eigenschaften verfügt, zum anderen eine Oberflächenstruktur aufweist, die beim Aufpumpen eine gute Haftung des Luftpumpenkopfs bedingt.

Erfindungsgemäß kann die chemische Natur und die Form des Füllstoffs (F1) in weiten Bereichen variieren, solange eine ausreichende Verträglichkeit mit dem thermoplastischen Kunststoff (P1) gegeben ist. Dabei sollte der Füllstoff (F1) so gewählt werden, dass die Form und Partikelgröße des Füllstoffs eine ausreichende Mischbarkeit und gleichmäßige Verteilung in der Zusammensetzung ermöglichen.

Geeignete Füllstoffe sind beispielsweise Glasfasern, Glaskugeln, Kohlenstoffasern, AramidFasern, Kaliumtitanat-Fasern, Fasern aus flüssig-kristallinen Polymeren, organische faserförmige Füllstoffe oder anorganische Verstärkungsmaterialien. Organische faserförmige Füllstoffe sind zum Beispiel Cellulosefasern, Hanffasern, Sisal oder Kenaf. Anorganische Verstärkungsmaterialien sind beispielsweise Keramikfüllstoffe, wie Aluminium- und Bornitrid, oder mineralische Füllstoffe, wie Asbest, Talkum, Wollastonit, Microvit, Silikate, Kreide, calcinierte Kaoline, Glimmer und Quarzmehl.

Bevorzugt sind im Rahmen der vorliegenden Erfindung faserförmige Füllstoffe. Die Fasern weisen im Allgemeinen einen Durchmesser von 3 bis 30 µm, bevorzugt 6 bis 20 µm und besonderes bevorzugt von 8 bis 15 µm auf. Die Faserlänge im Compound beträgt in der Regel 20 µm bis 1000 µm, bevorzugt 180 bis 500 µm und besonderes bevorzugt 200 bis 400 µm.

Demgemäß betrifft die vorliegende Erfindung gemäß einer weiteren Ausführungsform auch ein Ventil wie zuvor beschrieben oder einen Ventilschaft wie zuvor beschrieben, wobei der Füllstoff faserförmig ist.

Die Füllstoffe, beispielsweise die faserförmigen Füllstoffe, können zur besseren Verträglichkeit mit dem thermoplastischen Kunststoff vorbehandelt sein, beispielsweise mit einer Silanverbindung.

Erfindungsgemäß kann somit die Oberfläche des Füllstoffs zumindest teilweise von einer Hülle umgeben sein, auch als zumindest teilweise Umhüllung bezeichnet. Die Hülle ist gleichzusetzen mit dem häufig verwendeten Begriff *Coating* oder Oberflächenbehandlung. Die Hülle haftet entweder durch Formschluss oder van-der Waals-Kräften rein physikalisch auf dem Füllstoff, oder sie ist chemisch mit dem Füllstoff verbunden. Dies geschieht überwiegend durch kovalente Wechselwirkung.

Die Oberflächenbehandlung oder auch Oberflächenmodifikation, die zu einer Hülle um das eingeschlossene Teil, in vorliegendem Fall den Füllstoff führt, wird ausführlich in der Literatur beschrieben. Ein Basiswerk in dem geeignete Materialien als auch die Beschichtungstechnik beschrieben wird, ist "Particulate-Filled Polymer Composites (2nd Edition), edited by: Rothon, Roger N., 2003, Smithers Rapra Technology. Besonders relevant ist das Kapitel 4. Entsprechende Materialien sind kommerziell erhältlich, z.B. bei der Firma Nabaltec, Schwandorf oder Martinswerke in Bergheim, beide in Deutschland.

Bevorzugte Beschichtungsmaterialien sind gesättigte oder ungesättigte Polymere mit Säurefunktion, bevorzugt mit mindestens einer Acrylsäure oder einem Säureanhydrid. Ebenfalls bevorzugte Beschichtungsmaterialien sind monomere organische Säuren und ihre Salze, bevorzugt gesättigte Fettsäuren, weniger gebräuchlich sind ungesättigte Säuren. Bevorzugte Fettsäuren umfassen 10 bis 30 Kohlenstoffatome, bevorzugt 12 bis 22, insbesondere 16 bis 20 Kohlenstoffatom, sie sind aliphatisch und haben bevorzugt keine Doppelbindungen. Ganz besonders bevorzugt ist die Stearinsäure. Bevorzugte Fettsäurederivate sind ihre Salze, bevorzugt Calcium, Aluminium, Magnesium oder Zink. Besonders bevorzugt ist Calcium, insbesondere als Calciumstearat.

Andere bevorzugte Stoffe, die eine Hülle den Füllstoff bilden, sind Organosilanverbindungen mit folgendem Aufbau:

(R)₄₋ₙ---Si---Xₙ

mit n = 1, 2 oder 3.
X ist eine hydrolysierbare Gruppe, die mit der Oberfläche des Füllstoffs reagiert, auch als Kupplungsgruppe bezeichnet. Bevorzugt ist der Rest R ein Kohlenwasserstoffrest und ist so ausgewählt, dass die Orgnosilanverbindung gut mit dem thermoplastischen Polyurethan mischbar ist. Der Rest R ist über eine hydrolytisch stabile Kohlenstoff-Silizium Verbindung mit dem Silicium verbunden und kann reaktiv sein oder inert. Ein Beispiel für einen reaktiven Rest, der bevorzugt ein ungesättigter Kohlenwasserstoffrest ist, ist ein Allylrest. Bevorzugt ist der Rest R inert, weiter bevorzugt ein gesättigter Kohlenstoffwasserstoffrest mit 2 bis 30 Kohlenstoffatomen, bevorzugt 6 bis 20 Kohlenstoffatomen und besonders bevorzugt 8 bis 18 Kohlenstoffatomen, weiter bevorzugt handelt es sich um einen aliphatischen Kohlenwasserstoffrest, der verzweigtkettig oder linear ist.

Weiter bevorzugt enthält die Organosilanverbindung nur einen Rest R und hat die allgemeine Formel:

R---Si---(X)₃

Bevorzugt ist die Kupplungsgruppe X ein Halogen, bevorzugt Chlor und demzufolge das Kupplungreaganz ein Tri-, Di- oder Monochlorsilan. Ebenfalls bevorzugt ist die Kupplungsgruppe X eine Alkoxy-Gruppe, bevorzugt eine Methoxy- oder eine Ethoxy-Gruppe. Ganz bevorzugt ist der Rest das Hexadecyl-Radikal, bevorzugt mit der Methoxy- oder Ethoxy-Kupplungsgruppe, somit ist das Organosilan das Hexadecysilan.

Die Silane werden mit 0,1 Gew.-% bis 5 Gew.-%, weiter bevorzugt 0,5 Gew.-% bis 1,5 Gew.-% und besonders bevorzugt mit ca. 1 Gew. % bezogen auf die Gesamtmenge des Füllstoffs auf dieses aufgebracht. Carbonsäuren und -derivate werden mit 0,1 Gew.-% bis 5 Gew.-%, weitere bevorzugt mit 1,5 Gew. % bis 5 Gew. % und besonders bevorzugt mit 3 Gew.-% bis 5 Gew.-% bezogen auf die Gesamtmenge des Füllstoffs auf dieses aufgebracht.

Bevorzugt werden anorganische faserförmige Füllstoffe verwendet. Bei Verwendung von anorganischen faserförmigen Füllstoffen wird ein größerer Verstärkungseffekt sowie eine höhere Wärmestandfestigkeit gefunden.

Besonders bevorzugte anorganische Fasern für die vorliegende Erfindung sind insbesondere beschichtete Glasfasern aus Glas, bevorzugt aus E-Glas, mit einer Stärke von 3 bis 30 µm, insbesondere 8 bis 15 µm, sowie mit einem Maximum der Faserlängenverteilung im Bereich von 0,03 mm bis etwa 15 mm, insbesondere von 1 bis 10 mm, die nach dem Stand der Technik hergestellt werden.

Erfindungsgemäß kann die Zusammensetzung (Z1) auch 2 oder mehr Füllstoffe enthalten.

Der Anteil des Füllstoffs (F1) in der Zusammensetzung (Z1) liegt beispielsweise im Bereich von 5 bis 55 Gew.-% bezogen auf die gesamte Zusammensetzung (Z1), vorzugsweise im Bereich von 10 bis 50 Gew.-% bezogen auf die gesamte Zusammensetzung (Z1), weiter bevorzugt im Bereich von 15 bis 40 Gew.-% bezogen auf die gesamte Zusammensetzung (Z1), besonders bevorzugt im Bereich von 20 bis 30 Gew.-% bezogen auf die gesamte Zusammensetzung (Z1).

Demgemäß betrifft die vorliegende Erfindung gemäß einer weiteren Ausführungsform auch ein Ventil wie zuvor beschrieben oder einen Ventilschaft wie zuvor beschrieben, wobei die Zusammensetzung (Z1) den Füllstoff (F1) in einer Menge im Bereich von 5 bis 55 Gew.-% bezogen auf die gesamte Zusammensetzung (Z1) enthält.

Erfindungsgemäß enthält die Zusammensetzung (Z1) einen thermoplastischen Kunststoff (P1). Vorzugsweise besitzt der eingesetzte thermoplastische Kunststoff eine Zähigkeit und Duktilität, die gewährleistet, dass der Schaft bei tiefen Temperaturen nicht bricht. Geeignete thermoplastische Kunststoffe sind beispielsweise zähe oder zähmodifizierte Typen aus den Gruppen der Styrole, Styrolcopolymere, Polyamide, Polyester, Polyether wie Polyoxymethylen, Polyolefine und Polyurethane. Besonders bevorzugt ist ein thermoplastischer Kunststoff, der für Temperaturen bis minus 30°C geeignet ist.

Erfindungsgemäß kann die Zusammensetzung (Z1) auch 2 oder mehr thermoplastische Kunststoffe enthalten.

Ein besonders bevorzugter Werkstoff ist thermoplastisches Polyurethan (TPU), das im ausgehärteten Zustand über die für den Einsatz als Ventilschaft notwendige Festigkeit und über eine Elastizität verfügt, die es erlaubt, den Schaft zu verbiegen, ohne dass er bricht. Ein derartiges Ventil bietet Vorteile hinsichtlich einer Vielfalt an Konstruktionsvarianten sowie in der Zugänglichkeit und Handhabung, z.B. beim Aufpumpen eines Reifens.

Demgemäß betrifft die vorliegende Erfindung gemäß einer weiteren Ausführungsform auch ein Ventil wie zuvor beschrieben oder einen Ventilschaft wie zuvor beschrieben, wobei der thermoplastischen Kunststoff (P1) ein thermoplastisches Polyurethan ist.

Grundsätzlich ist jedes thermoplastische Polyurethan für die Zusammensetzung (Z1) für die Herstellung des Ventilschaftes geeignet. Dabei können die Eigenschaften des eingesetzten thermoplastischen Polyurethans in weiten Bereichen variieren. Vorzugsweise weist das thermoplastische Polyurethan eine Shore Härte im Bereich von 85A bis 85D auf, weiter bevorzugt im Bereich von 90A bis 50D und besonders bevorzugt im Bereich von 95A bis 98A.

Demgemäß betrifft die vorliegenden Erfindung gemäß einer weiteren Ausführungsform auch ein Ventil wie zuvor beschrieben oder einen Ventilschaft wie zuvor beschrieben, wobei das thermoplastische Polyurethan eine Shore Härte im Bereich von 85A bis 85D aufweist.

Weiterhin betrifft die vorliegenden Erfindung gemäß einer weiteren Ausführungsform auch ein Ventil wie zuvor beschrieben oder einen Ventilschaft wie zuvor beschrieben, wobei das thermoplastische Polyurethan ein E-Modul im Bereich von 500 bis 8000 MPa aufweist, bestimmt im Zugversuch gemäß DIN EN ISO 527.

Gemäß einer weiteren Ausführungsform der vorliegenden Erfindung wird ein thermoplastisches Polyurethan mit einer geringeren Härte eingesetzt, so dass der Ventilschaft flexibel ist. Dies ermöglicht für einige Anwendungen eine bessere Erreichbarkeit des Ventils.

Thermoplastische Polyurethane sind hinlänglich bekannt. Erfindungsgemäß erfolgt die Herstellung der thermoplastischen Polyurethane durch Umsetzung von Diisocyanaten, die auch als Komponente a) bezeichnet werden, mit Polyolen und gegebenenfalls weiteren gegenüber Isocyanaten reaktiven Verbindungen, auf die gemeinsam auch als Komponente b) Bezug genommen wird, und Kettenverlängerungsmitteln, die auch als Komponente c) angesprochen werden, gegebenenfalls in Gegenwart von Katalysatoren, die auch als Komponente d) angesprochen werden, und/oder üblichen Hilfsstoffen und/oder Zusatzstoffen, die auch als Komponente e) angesprochen werden.

Die bei der Herstellung der Polyurethane üblicherweise verwendeten Komponenten a), b), c) sowie gegebenenfalls d) und/oder e) sollen im Folgenden beispielhaft beschrieben werden:
Als organische Isocyanate, Komponente a), können allgemein bekannte aromatische, aliphatische, cycloaliphatische und/oder araliphatische Isocyanate, bevorzugt Diisocyanate eingesetzt werden, weiter bevorzugt 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat, Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1-Isocyanato-4-[(4-isocyanatocyclohexyl) methyl]cyclohexan (H12MDI), 2,6-Diisocyanatohexancarbonsäureester, 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, bevorzugt 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Hexamethylendiisocyanat, 1-Isocyanato-4-[(4-isocyanatocyclohexyl) methyl]cyclohexan, und/oder IPDI. Weitere geeignete aliphatische Isocyanate sind beispielsweise Hexamethylendiisocyanat (HDI), oder 1-Isocyanato-4-[(4-isocyanatocyclohexyl) methyl]cyclohexan (H12MDI).

Besonders bevorzugte Isocyanate sind erfindungsgemäß Hexamethylendiisocyanat (HDI), 2,2'-, 2,4'- und/oder 4,4'-Diphenylmethandiisocyanat (MDI) und 2,4- und/oder 2,6-Toluylendiisocyanat (TDI), oder 1-Isocyanato-4-[(4-isocyanatocyclohexyl) methyl]cyclohexan (H12MDI), wobei 2,2'-, 2,4'- und/oder 4,4'-Diphenylmethandiisocyanat (MDI) besonders bevorzugt ist, insbesondere 4,4'-Diphenylmethandiisocyanat.

Demgemäß betrifft die vorliegende Erfindung gemäß einer weiteren Ausführungsform auch ein Ventil wie zuvor beschrieben oder einen Ventilschaft wie zuvor beschrieben, wobei das thermoplastische Polyurethan auf einem aromatischen Isocyanat basiert.

Als gegenüber Isocyanaten reaktive Verbindungen, Komponente b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten (Mn), bevorzugt zahlenmittleren Molekulargewichten zwischen 500 g/mol und 8000 g/mol, bevorzugt 600 g/mol bis 6000 g/mol, insbesondere 800 g/mol bis weniger als 3000 g/mol, und bevorzugt einer mittleren Funktionalität gegenüber Isocyanaten von 1,8 bis 2,3, bevorzugt 1,9 bis 2,2, insbesondere 2. Das zahlenmittlere Molekulargewicht wird nach DIN 55672-1 bestimmt.

Als Polyesterole können Polyester auf Basis von Disäuren und Diolen eingesetzt werden. Als Diole werden vorzugsweise Diole mit 2 bis 10 Kohlenstoffatomen, beispielsweise Ethandiol, Butandiol oder Hexandiol, insbesondere 1,4 Butandiol oder Mischungen daraus eingesetzt. Als Disäuren können alle bekannten Disäuren eingesetzt werden, beispielsweise lineare oder verzweigtkettige Disäuren mit vier bis 12 Kohlenstoffatomen oder Mischungen daraus.

Weiter setzt man als Komponente b) Polyetherpolyole ein, beispielsweise solche auf der Basis von allgemein bekannten Startersubstanzen und üblichen Alkylenoxiden, bevorzugt Ethylenoxid, Propylenoxid und/oder Butylenoxid, weiter bevorzugt Polyetherole basierend auf Propylenoxid-1 ,2 und Ethylenoxid und insbesondere Polyoxytetramethylenglykole. Der Vorteil der Polyetherpolyole liegt u. a. in der höheren Hydrolysestabilität.

Weiterhin können als Polyetherole bevorzugt sogenannte niedrig ungesättigte Polyetherole verwendet werden. Unter niedrig ungesättigten Polyolen werden im Rahmen dieser Erfindung insbesondere Polyetheralkohole mit einem Gehalt an ungesättigten Verbindungen von kleiner als 0,02 meq/g, bevorzugt kleiner als 0,01 meq/g, verstanden. Derartige Polyetheralkohole werden zumeist durch Anlagerung von Alkylenoxiden, insbesondere Ethylenoxid, Propylenoxid und Mischungen daraus, an die oben beschriebenen Diole oder Triole in Gegenwart von hochaktiven Katalysatoren hergestellt.

Derartige hochaktive Katalysatoren sind bevorzugt Cäsiumhydroxid und Multimetallcyanidkatalysatoren, auch als DMC-Katalysatoren bezeichnet. Ein häufig und bevorzugt eingesetzter DMC-Katalysator ist das Zinkhexacyanocobaltat. Der DMC-Katalysator kann nach der Umsetzung im Polyetheralkohol belassen werden, üblicherweise wird er entfernt, beispielsweise durch Sedimentation oder Filtration.

Statt eines Polyols können auch Mischungen verschiedener Polyole als Komponente b) eingesetzt werden. Geeignete thermoplastische Polyurethane im Rahmen der vorliegenden Erfindung sind beispielsweise solche auf Basis von Polyestern oder Polyethern.

Als Kettenverlängerungsmittel, Komponente c), können allgemein bekannte aliphatische, araliphatische, aromatische und/oder cycloaliphatische Verbindungen mit einem Molekulargewicht, bevorzugt mittleren Molekulargewicht von 50 g/mol bis 499 g/mol, bevorzugt 2-funktionelle Verbindungen, eingesetzt werden. Bevorzugt sind beispielsweise Alkandiole mit 2 bis 10 C-Atomen im Alkylenrest, bevorzugt Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, weiter bevorzugt unverzweigte Alkandiole, insbesondere Propan-1,3-diol, Butan-1,4-diol und Hexan-1,6-diol.

Geeignete Katalysatoren, Komponente d), welche insbesondere die Reaktion zwischen den NCO-Gruppen der Diisocyanate, Komponente a) und der Komponente b) beschleunigen, sind die nach dem Stand der Technik bekannten und üblichen tertiären Amine, wie z. B. bevorzugt Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z. B. bevorzugt Eisen-(III)- acetylacetonat, Zinnverbindungen, z. B. bevorzugt Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,00001 Gew.-Teilen bis 0,1 Gew.-Teilen pro 100 Gew.-Teile Polyhydroxylverbindung, Komponente b) eingesetzt.

Neben Katalysatoren, Komponente d), können den Aufbaukomponenten a) bis c) auch übliche Zusatzstoffe und/oder Hilfsmittel, Komponente e), hinzugefügt werden. Genannt seien beispielsweise Treibmittel, oberflächenaktive Substanzen, Flammschutzmittel, Keimbildungsmittel, Gleit- und Entformungshilfen, Farbstoffe und Pigmente, Stabilisatoren, z. B. bevorzugt gegen Hydrolyse, Licht, Hitze oder Verfärbung, anorganische und/oder organische Füllstoffe, Weichmacher und Metalldeaktivatoren. Als Hydrolyseschutzmittel werden bevorzugt oligomere und/oder polymere aliphatische oder aromatische Carbodiimide verwendet.

Die Herstellung des thermoplastischen Polyurethans kann nach den bekannten Verfahren diskontinuierlich oder kontinuierlich, beispielsweise mit Reaktionsextrudern oder dem Bandverfahren nach one-shot oder dem Prepolymerverfahren, bevorzugt nach dem one-shot-Verfahren erfolgen. Bei diesen Verfahren können die zur Reaktion kommenden Komponenten a), b) und gegebenenfalls c), d) und/oder e) nacheinander oder gleichzeitig miteinander vermischt werden, wobei die Reaktion unmittelbar einsetzt. Beim Extruderverfahren werden die Aufbaukomponenten a), b) sowie gegebenenfalls die weiteren Komponenten c), d) und/oder e) einzeln oder als Gemisch in den Extruder eingeführt, z. B. bevorzugt bei Temperaturen von 100 °C bis 280 °C, weiter bevorzugt bei 140 °C bis 250 °C zur Reaktion gebracht, das erhaltene Polyurethan wird dann extrudiert, abgekühlt und granuliert.

Zur Optimierung der Eigenschaften des eingesetzten thermoplastischen Polyurethans können die Polyolkomponente, Komponente b), und Kettenverlängerer, Komponente c) oder die Verhältnisse der eingesetzten Komponenten variiert werden.

Die Umsetzung des Isocyanates, Komponente a) mit den Isocyanat-reaktiven Komponenten b) und ggf. c) erfolgt in einer bevorzugten Ausführungsform bei einer Kennzahl zwischen 900 und 1100, besonders bevorzugt zwischen 950 und 1050, insbesondere zwischen 980 und 1020. Hierbei ist die Kennzahl definiert durch das Verhältnis der insgesamt bei der Umsetzung eingesetzten Isocyanatgruppen der Komponente a) zu den Isocyanat-reaktiven Gruppen, also insbesondere den Gruppen der Komponenten b) und c). Bei einer Kennzahl von 1000 kommt auf eine Isocyanatgruppe der Komponente a) ein aktives Wasserstoffatom. Bei Kennzahlen über 1000 liegen mehr Isocyanatgruppen als OH-Gruppen vor.

Um die Polyurethane und daraus hergestellten Zusammensetzungen (Z1) gegen Alterung zu stabilisieren, können dem Polyurethan Stabilisatoren zugegeben werden, die auch als Hilfsmittel angesprochen werden. Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, Thiosynergisten, Organophosphorverbindungen des trivalenten Phosphors, Hindered Amine Light Stabilizer, UV-Absorber, Hydrolyseschutzmittel, Quencher und Flammschutzmittel.

Nähere Angaben über die oben genannten Hilfsmittel- und Zusatzstoffe sind der Fachliteratur zu entnehmen, z. B. aus Plastics Additive Handbook, 5th edition, H. Zweifel, ed., Hanser Publishers, München, 2001, S. 98-136.

In einer bevorzugten Ausführungsform der vorliegenden Erfindung wird ein thermoplastisches Polyurethan (TPU) mit aromatischen Gruppen verwendet, beispielsweise ein thermoplastisches Polyurethan, das auf einem aromatischen Isocyanat basiert.

Der Anteil des thermoplastischen Kunststoffs (P1) in der Zusammensetzung (Z1) liegt vorzugsweise im Bereich von 45 bis 95 Gew.-% bezogen auf die gesamte Zusammensetzung (Z1), beispielsweise im Bereich von 50 bis 90 Gew.-% bezogen auf die gesamte Zusammensetzung (Z1), weiter bevorzugt im Bereich von 60 bis 85 Gew.-% bezogen auf die gesamte Zusammensetzung (Z1), besonders bevorzugt im Bereich von 70 bis 80 Gew.-% bezogen auf die gesamte Zusammensetzung (Z1).

Demgemäß betrifft die vorliegende Erfindung gemäß einer weiteren Ausführungsform auch ein Ventil wie zuvor beschrieben oder einen Ventilschaft wie zuvor beschrieben, wobei die Zusammensetzung (Z1) den thermoplastischen Kunststoff (P1) in einer Menge im Bereich von 45 bis 95 Gew.-% bezogen auf die gesamte Zusammensetzung (Z1) enthält.

Erfindungsgemäß kann die Zusammensetzung (Z1) neben dem thermoplastischen Kunststoff (P1) und dem Füllstoff (F1) auch weitere Komponenten enthalten, beispielsweise Entformungshilfsmittel, UV Schutz, Antioxidant oder Farbpigmente.

Geeignete Verfahren zur Herstellung der Zusammensetzung (Z1) sind dem Fachmann an sich bekannt. Im Rahmen der vorliegenden Erfindung werden für das Kompoundieren üblicherweise an sich bekannte Verfahren eingesetzt.

Der Ventilschaft besteht erfindungsgemäß aus der Zusammensetzung (Z1).

Die Herstellung eines Ventilschaftes aus der Zusammensetzung (Z1) kann beispielsweise erfolgen durch Spritzguss, Extrusion und/oder Sinterverfahren. Bevorzugt ist die Herstellung mittels Spritzguss- oder Extrusionsverfahren. Erfindungsgemäß ist es möglich, dass nach der Herstellung des Ventilschafts ein Gewinde in den Ventilschaft geschnitten wird, um einen Verschluss anbringen zu können. Ebenso ist es möglich, dass das Gewinde bei der Herstellung erzeugt wird, beispielsweise bei einer Herstellung des Ventilschafts mittels Spritzgussverfahren.

Geeignete Spritzgussmaschinen sind an sich bekannt. Beispielsweise geeignet sind Spritzgussmaschinen, die mit eingängigen Schnecken, bevorzugt eingängigen Schnecken mit mehreren Zonen, ausgerüstet sind.

Geeignete Verarbeitungstemperaturen liegen beispielsweise im Bereich von 180 bis 260°C, bevorzugt im Bereich von 190 bis 250°C, weiter bevorzugt im Bereich von 200 bis 240°C.

Das erfindungsgemäße Ventil umfasst neben dem Ventilschaft üblicherweise einen Ventilfuß. Der Ventilfuß besteht üblicherweise aus einem thermoplastischen Kunststoff, beispielsweise aus einem thermoplastischen Polyurethan, der beispielsweise durch Gießen an den Ventilschaft angebracht werden kann.

Demgemäß betrifft die vorliegende Erfindung gemäß einer weiteren Ausführungsform auch ein Ventil wie zuvor beschrieben, wobei das Ventil einen Ventilfuß aus einem thermoplastischen Material umfasst.

Dabei kann im Rahmen der vorliegenden Erfindung das Ventil so ausgestaltet sein, dass es sich zur Befestigung an einem Innenschlauch bzw. Schlauchabschnitt für einen Fahrzeugreifen eigene, insbesondere einem Innenschlauch oder Schlauchabschnitt für einen Fahrradreifen.

Demgemäß betrifft die vorliegende Erfindung auch die Verwendung eines Ventils wie zuvor beschrieben zur Herstellung eines Formkörpers umfassend einen aufblasbaren Schlauchabschnitt. Gemäß einer weiteren Ausführungsform betrifft die vorliegende Erfindung auch die Verwendung wie zuvor beschrieben, wobei der Formkörper ein Innenschlauch für einen Fahrzeugreifen ist

Dabei hat es sich als vorteilhaft herausgestellt, als Material zur Herstellung des Ventilfußes ein thermoplastisches Polyurethan zu wählen, dessen mechanische Eigenschaften wie Elastizität und Dehnung denen des Schlauchmaterials entsprechen. Besonders vorteilhaft wird der Ventilfuß aus demselben Material hergestellt wie der Schlauchabschnitt, auf dem der Ventilfuß befestigt werden soll. Bei einer entsprechenden Materialwahl wird die Wahrscheinlichkeit, dass sich beim Aufpumpen oder durch die Belastungen beim Betrieb des Schlauchabschnitts Spannungsrisse oder Ablösungen aufgrund unterschiedlicher Materialeigenschaften ergeben, deutlich reduziert.

Die Ausgangsmaterialien und Herstellungsverfahren für den Ventilfuß aus thermoplastischem Polyurethan entsprechen den oben ausgeführten Materialien für die Herstellung eines Ventilschaftes aus thermoplastischem Polyurethan.

Bevorzugt wird für den Ventilfuß ein thermoplastisches Polyurethan mit einer Shore-Härte von 40 A bis 70 D, bevorzugt von 50 A bis 50 D, weiter bevorzugt von 70 A bis 90 A verwendet. Neben den genannten Additiven ist es für die Verarbeitung von TPU förderlich, Gleitmittel einzusetzen. Diese rekrutieren sich aus den Stoffgruppen der Fettsäureamide, der Montansäureester, Glyzerinderivate und Polyolefinen sowie Kombinationen daraus. Die einzelnen Verbindungen sind der EP 1 826 225 A2 und der dort zitierten Literatur zu entnehmen. Für das erfindungsgemäße Verfahren ist ein möglichst geringer Anteil an Verarbeitungshilfsmitteln zu wählen, um eine bestmögliche Haftung des Ventilschaftes an den Fahrradschlauch zu gewährleisten. Gemessen an der gesamten Rezeptur ist ein Gleitmittel-Anteil von 0,001 bis 2 Gew.-%, bevorzugt von 0,01 bis 1 Gew.-% und besonders bevorzugt von 0,05 bis 0,5 Gew.-% zu wählen.

Demgemäß betrifft die vorliegende Erfindung auch ein Verfahren zur Herstellung eines wie zuvor beschriebenen Ventils, dadurch gekennzeichnet, dass der Schaft in eine Gießform eingelegt und der Ventilfuß während des Umgießens des Schaftes in der Gießform hergestellt wird.

In bevorzugten Ausgestaltungen der Erfindung umschließt der Ventilfuß den Schaft in axialer Richtung mindestens 3 mm, besonders bevorzugt mindestens 5 mm. Weiterhin ist in bevorzugten Ausgestaltungen der Erfindung der Ventilfuß so dimensioniert, dass der Ventilfuß am Ende des Schaftes in jede radiale Richtung mindestens so weit über den äußeren Rand des Schaftes hinaus ragt, wie es der Hälfte des Durchmessers des Schaftes an seinem unteren Ende entspricht. Besonders bevorzugt ragt der Ventilfuß am Ende des Schaftes in jede radiale Richtung mindestens so weit über den äußeren Rand des Schaftes hinaus, wie es dem Durchmesser des Schaftes an seinem unteren Ende entspricht. Beträgt der Durchmesser des Schaftes an seinem unteren Ende beispielsweise 5 mm, so ragt der Ventilfuß am Ende des Schaftes in jede radiale Richtung bevorzugt mindestens 2,5 mm, besonders bevorzugt mindestens 5 mm über den äußeren Rand des Schaftes hinaus. Der Außendurchmesser des Ventilfußes beträgt in diesem Beispiel also bevorzugt mindestens 10 mm, besonders bevorzugt mindestens 15 mm.

Die Bezeichnungen "axiale Richtung" und "radiale Richtung" beziehen sich auf die Achse des Schaftes, der üblicherweise eine zylindrische Form hat. Die Mindestmaße in axialer und radialer Richtung gewährleisten, dass nach der Befestigung des Ventils an einem Schlauchabschnitt der Schaft sicher mit dem Schlauchabschnitt verbunden ist und keine Undichtigkeit entsteht, durch die beispielsweise Luft aus dem Schlauchinneren in die Umgebung entweichen könnte.

Die Auflagefläche des Ventilfußes, die zur Befestigung auf einem Schlauchabschnitt vorgesehen ist, kann unterschiedliche Formen aufweisen. In einer Ausführungsform ist sie kreisrund, sodass der Überstand des Ventilfußes über den äußeren Rand des Schaftes an seinem unteren Ende in jede radiale Richtung identisch ist. In einer weiteren Ausführungsform ist die Auflagefläche oval, wobei sich die obigen Mindestmaße für den Überstand auf die Querachse beziehen. Als Querachse wird die kürzere Achse des Ovals bezeichnet, die längere Achse wird als Längsachse bezeichnet. Die Ausdehnung der Auflagefläche des Ventilfußes in der Längsachse beträgt vorzugsweise das 1,5- bis 3-fache ihrer Ausdehnung in der Querachse.

Ein weiterer Aspekt der Erfindung betrifft die Verwendung des erfindungsgemäßen Ventils zur Herstellung eines Fahrzeugreifens, der aus einem thermoplastischen Polyurethan gefertigt ist und ein Loch aufweist, durch das Luft in den Schlauch gefördert werden kann. Um dieses Loch herum ist der Schlauchabschnitt erfindungsgemäß haftend und vollumfänglich mit dem Ventilfuß eines erfindungsgemäßen Ventils verbunden, sodass der Innenraum des Schlauches dicht mit dem Innenraum des Schaftes verbunden ist. Geeignete Materialien zur Herstellung des Schlauchabschnittes sowie Verfahren zu seiner Herstellung wie Extrusion, Spritzguss oder Blasformen sind an sich bekannt.

Im Rahmen der vorliegenden Erfindung kann das Material des Schlauchabschnitts die gleiche Zusammensetzung aufweisen wie das Material des Ventils. Ebenso ist es möglich, dass Schlauchabschnitt und Ventil eine unterschiedliche Zusammensetzung aufweisen oder aus unterschiedlichen Materialien bestehen.

Im Rahmen der vorliegenden Erfindung bestehen vorzugsweise der Schlauchabschnitt und das Ventil zumindest teilweise aus einem thermoplastischen Polyurethan, wobei üblicherweise die Härte der eingesetzten thermoplastischen Polyurethane bei Schlauchabschnitt und Ventil nicht gleich ist.

Die Ausgangsmaterialien und Herstellungsverfahren für den Schlauchabschnitt aus thermoplastischem Polyurethan entsprechen den oben ausgeführten Materialien für die Herstellung eines Ventilschaftes aus thermoplastischem Polyurethan.

Bevorzugt wird für den Schlauchabschnitt ein thermoplastisches Polyurethan mit einer Shore-Härte von 40 A bis 70 D, bevorzugt von 50 A bis 50 D, weiter bevorzugt von 70 A bis 90 A verwendet.

Eine dauerhafte Verbindung zwischen dem Ventilfuß und der Oberfläche des Schlauchabschnitts, die das Loch umgibt, kann auf unterschiedliche Weise hergestellt werden. Hierfür geeignet sind beispielsweise bekannte Klebstoffe, insbesondere Klebstoffe auf Polyurethan-Basis.

Bevorzugt wird das Ventil dadurch mit dem Schlauchabschnitt verbunden, dass die Unterseite des Ventilfußes mit einem Lösungsmittel benetzt und anschließend auf die Oberfläche des Schlauchabschnitts gedrückt wird. Dieses Verfahren, bei dem nach dem Aufpressen der angelösten Oberfläche des Ventilfußes auf die Schlauchoberfläche eine formschlüssige Verklebung erfolgt, wird auch als "Quellschweißen" bezeichnet. Besonders bevorzugt wird das Lösungsmittel ausgewählt aus der Gruppe der Ether, zyklischen Ether, Amine, Amide, Alkohole oder halogenierten Kohlenwasserstoffe. Insbesondere enthält das Lösungsmittel Methanol, Ethanol, iso-Propanol, Dimethylformamid, n-Methylpyrrolidon und/oder Tetrahydrofuran. Mischungen aus den genannten Substanzen sind ebenfalls bevorzugt.

In einer weiteren bevorzugten Variante wird die Verbindung zwischen Ventilfuß und Schlauchabschnitt mittels eines Schweißverfahrens hergestellt. Insbesondere geeignet sind Verfahren des Thermoschweißens, Hochfrequenzschweißens oder des Ultraschallschweißens.

Demgemäß betrifft die vorliegende Erfindung ein Verfahren zur Herstellung eines wie zuvor beschriebenen Schlauchabschnitts, dadurch gekennzeichnet, dass der Ventilfuß mit dem Schlauchabschnitt mittels eines Schweißverfahrens, insbesondere mittels Thermoschweißen, Hochfrequenzschweißen oder Ultraschallschweißen, verbunden wird.

Im Rahmen der vorliegenden Erfindung kann dabei zunächst ein Loch in den Schlauchabschnitt eingebracht werden, das ein Aufpumpen des fertigen Schlauchs ermöglicht, und anschließend das Ventil bzw. der Ventilfuß bündig mit dem Loch aufgebracht werden. Es ist jedoch auch möglich, dass zunächst das Ventil mit dem Schlauchabschnitt verbunden wird und dann das Loch durch den Ventilschaft hindurch erzeugt wird.

Das erfindungsgemäße Ventil sowie damit ausgerüstete Schlauchabschnitte sind einfach und kostengünstig herzustellen. Die Verbindungen zwischen Ventilschaft und Ventilfuß einerseits sowie zwischen Ventil und Schlauchabschnitt andererseits sind robust und sicher, sodass sich der Erfindungsgegenstand für eine breite Palette an Einsatzmöglichkeiten eignet.

Es ist jedoch im Rahmen der vorliegenden Erfindung gemäß einer alternativen Ausführungsform auch möglich, dass das erfindungsgemäße Ventil so ausgestaltet ist, dass es sich zur Herstellung eines schlauchlosen Fahrzeugreifens, insbesondere eines schlauchlosen Fahrradreifens, eines sogenannten "Tubeless" Systems, eignet. Geeignete Ventile weisen üblicherweise einen Ventilfuß aus einem thermoplastischen Material auf.

Dabei dichtet üblicherweise der Ventilfuß das Tubeless System, bestehend aus Reifen und Felge, an der Felgen Innenseite ab. Der Ventilschaft wird mittels Felgenmutter gekontert und ist aufgrund der hohen mechanischen Belastbarkeit besonders geeignet.

Vorzugsweise umfasst das Ventil gemäß dieser Ausführungsform einen Ventilfuß, der besonders bevorzugt in einer runden Kontur ausgelegt ist. Beispielsweise kann der Ventilfuß eine zylindrische, konische Form aufweisen und im Herstellungsprozess an den Ventilschaft angespritzt werden.

Der Ventilfuß ist vorzugsweise aus einem thermoplastischen Material mit einer geringeren Härte als der Ventilschaft gefertigt, um einen Formschluss zum Tiefbett der Felge bzw. Ventilloch zu gewährleisten. Der Ventilschaft verhindert als Kernmaterial ein Durchrutschen des Ventils durch die Ventillochbohrung der Felge. Für eine vollständige Abdichtung des Systems muss der Ventilschaft mit einer Felgenmutter gekontert werden. Hierfür ist der Ventilschaft vorzugsweise mit einem Außen-Gewinde ausgestattet.

Demgemäß betrifft die vorliegende Erfindung gemäß einer weiteren Ausführungsform auch ein Ventil wie zuvor beschrieben, wobei der Ventilschaft ein Außengewinde aufweist.

Gemäß einem weiteren Aspekt betrifft die vorliegende Erfindung daher auch die Verwendung des erfindungsgemäßen Ventils wie zuvor beschrieben zur Herstellung eines schlauchlosen Fahrradreifens.

Die vorliegende Erfindung betrifft auch einen Formkörper umfassend einen aufblasbaren Schlauchabschnitt und ein Ventil wie zuvor beschrieben, wobei der Schlauchabschnitt und das Ventil über einen Ventilfuß miteinander verbunden sind. Bei dem Formkörper kann es sich beispielsweise um einen Innenschlauch für einen Fahrzeugreifen handeln, beispielsweise um einen Innenschlauch für einen Fahrradreifen, also einen Fahrradschlauch.

Die erfindungsgemäßen Ventile bzw. aufblasbaren Schlauchabschnitte eignen sich beispielsweise für die Herstellung von Innenschläuchen, insbesondere für die Herstellung von Innenschläuchen für Fahrräder.

Die erfindungsgemäßen Ventile eigenen sich wie ausgeführt auch für die Herstellung von schlauchlosen "Tubeless" Reifen für Fahrräder.

Im Folgenden wird die Erfindung anhand von Beispielen näher erläutert.

### BEISPIELE

### 1. Beispiel 1 (verwendete Materialien)

Chopvantage HP3550 EC10-3,8: Glasfaser von PPG Industries Fiber Glass, Energieweg 3, 9608 PC Westerbroek, The Netherlands. E-Glas, Filamentdurchmesser 10µm, Länge 3,8mm.
TPU 1: TPU der Shore Härte 75D, basiert auf Polytetrahydrofuran (PTHF) mit einem Molekulargewicht (Mn) von 1000 Dalton, 1,4-Butandiol, MDI.
TPU 2: TPU der Shore Härte 80D, basiert auf Polytetrahydrofuran (PTHF) mit einem Molekulargewicht (Mn) von 1000 Dalton, 1,4-Butandiol, MDI.
TPU 3: TPU der Shore Härte 60D, basiert auf Polytetrahydrofuran (PTHF) mit einem Molekulargewicht (Mn) von 1000 Dalton, 1,4-Butandiol, MDI.
TPU 4: TPU der Shore Härte 65D, basiert auf Polytetrahydrofuran (PTHF) mit einem Molekulargewicht (Mn) von 1000 Dalton, 1,4-Butandiol, MDI.
TPU 5: Glasfasergefülltes TPU der Shore Härte 70D hergestellt durch Einkompoundieren von 20% der Glasfaser Chopvantage HP3550 EC10-3,8 in TPU 3.
TPU 6: Glasfasergefülltes TPU der Shore Härte 75D hergestellt durch Einkompoundieren von 20% der Glasfaser Chopvantage HP3550 EC10-3,8 in TPU 4.

### 2. Beispiel 2

Aus den Materialien TPU 1, TPU 2, TPU 5 und TPU 6 wurde jeweils ein Ventilschaft mit einer Länge von 58 mm und einem Aussendurchmesser von 6 mm gefertigt. Fahrradschläuche wurden jeweils mit Ventilen mit diesen Ventilschäften hergestellt.

### 3. Beispiel 3

Tubetest auf dynamischen Drumtester
Bremse: Magura HS33
Rad: Whizz Wheels DP18 622x15C mit High Pressure Schwalbe Tubelessband und Temperatursensor
Mantel: Schwalbe ONE V-Guard, Folding 23-622 B/B-SK HS448 OSC 127EPICurrent Standard - 11600514
Schlauch: Schwalbe SV20E EVOLUTION TUBE 18/25-622/630 EK 40mm, mit einem Gewicht von 32g, einer Schlauchdicke von 0,25mm, einem Schlauchinnendruck von 8 bar.

Das Rad wurde bei einer Geschwindigkeit von 25 km/h mit einer Bremsstärke von 10 V belastet. Die Temperaturentwicklung stieg durch die Bremseinwirkung durchschnittlich auf 115°C (gemessen in der Felge) an. Dies entspricht in etwa den dynamischen Belastungen, die in der Praxis auftreten. Sowohl Temperatur- als auch Bremskraft führen zu einer Belastung des Schafts.

| Material Ventilschaft | Versuch | Bemerkungen |
|---|---|---|
| TPU 1 | 1 | Ventilschaft ist eingeknickt |
| | 2 | Ventilschaft ist eingeknickt |
| TPU 2 | 1 | Ventilschaft ist eingeknickt |
| | 2 | Ventilschaft ist eingeknickt |
| TPU 5 | 1 | Ventilschaft ist nicht eingeknickt |
| | 2 | Ventilschaft ist nicht eingeknickt |
| TPU 6 | 1 | Ventilschaft ist nicht eingeknickt |
| | 2 | Ventilschaft ist nicht eingeknickt |

Die Ventilschäfte aus glasfasergefülltem TPU sind den nicht glasfasergefüllten TPU überlegen. Die glasfasergefüllten Schäfte weisen keinerlei Verformung auf. Symptomatisch für die Standard TPU Ausführungen ist ein Einknicken des Ventilschafts.

### 4. Beispiel 4

### Biegetest - Ermittlung der Flexibilität sowie des Rückstellverhaltens

Für die Ermittlung der genannten Eigenschaften wurden diverse Schlauchmuster mit Reifen in einem handelsüblichen Laufrad montiert. Das Laufrad wurde fixiert und der Ventilschaft an einem definierten Punkt mit einer Fläche von 3mm2 auf einem herkömmlichen Zug/Druck Tester (Apparatur von Zwick/Röll) belastet. Der maximale Weg (Ausfuhr des Drucktesters) beträgt 7mm ab Kontakt zum Ventilschaft.

Danach ist der Schaft je nach Ausführung soweit weit verbogen, dass der Kontakt zur Fläche abreißt. Ermittelt wird die durchschnittliche Kraft (N), die zur Erreichung des max. Wegs erreicht wird. Die Schäfte aus den TPU's 1 und 2 liegen in einem Bereich von 170 - 186N. Die glasfasergefüllten Schäfte aus den TPU's 5 und 6 bei 108 N (TPU 5) sowie 140N (TPU 6). Dementsprechend gewährleistet das glasfaserverstärkte Material eine wesentlich höhere Flexibilität. Darüber hinaus, gehen die glasfasergefüllten Schäfte (TPU 5 und 6) nach der max. Biegung in die Ausgangsposition zurück. Die Standard TPUs (TPU 1 und 2) halten die Verformung nach der Biegung bei, eine Rückstellung des Materials ist nicht gegeben.

### 5. Beispiel 5

### Verformung durch Hitze im statischen Zustand

Diverse Schläuche mit Standard TPU Schaft sowie glasfasergefüllten Schäften wurden bei Außentemperaturen von 35°C in der Sonne gelagert. Dabei wurde im 30min Takt die Temperatur auf der schwarzen Außenkarkasse des Reifens ermittelt. Die Standard TPU (TPU 1 und 2) Schäfte wiesen allesamt einen hohen Luftverlust durch das Aufquellen des Schafts auf. Die Temperatur betrug ca. 70°C. Die glasfasergefüllten Schäfte zeigten keinen Luftverlust auf.

### 6. Beispiel 6

### Befüllung eines Fahrradschlauchs mit Hochdruck (>6bar)

Im Vergleich wurden Fahrrad-Schläuche mit Ventilschäften mit und ohne Glasfaser-Füllung bis zu einem Luftdruck von 10bar befüllt. Dieser Wert entspricht der oberen Grenze der Anwendung im Rennradbereich. Die Luft-Befüllung erfolgte mit zwei, handelsüblichen Standpumpen, die mittels Gummidichtung und Klemmmechanismus am Ventilschaft fixiert werden. Dabei wurde festgestellt, dass es bei den Ventilen aus thermoplastischen Kunststoffen ohne Glasfaser-Füllung, die eine glatte Oberflächenstruktur aufweisen, zu einer unzureichenden Haftung zwischen Schaft und Luftpumpenkopf kommt. Bei der Befüllung mit Hochdrücken (>6bar) springt der Luftpumpenkopf, der mittels Klemmmechanismus fixiert wird, von dem Ventilschaft. Die Luftbefüllung wird dementsprechend erschwert bzw. ist nicht durchführbar.

Die Glasfaser gefüllten Ventilschäfte weisen durch das Additiv eine wesentlich höhere Oberflächen Rauheit auf, die eine Verzahnung des Pumpenkopfs bzw. der Gummidichtung gewährleistet. Eine Befüllung der Schläuche mit Glasfaser gefülltem Schaft, ist ohne ein Abspringen des Pumpenkopfes bis 9bar durchführbar.

| **Prüfung der Bepumbarkeit aufgrund der Oberflächenbeschaffenheit** | | |
|---|---|---|
| **Ventiltype / Pumpe** | SKS | Topeak |
| Messingventil | 10bar | 10bar |
| Standard TPU | 7,3bar | 6,8bar |
| TPU mit Glasfaser-Füllung | 10bar | 10bar |
| **Pumpe I: SKS Rennkompressor** | | |
| **Pumpe II: Topeak Joe Blow Sport II** | | |
| **Reifen:** Schwalbe One 23-622 (max. Luftdruck 10bar) | | |

## Patentansprüche

1. Ventil für einen Fahrzeugreifen umfassend einen rohrförmigen Schaft, wobei der Schaft aus einer Zusammensetzung (Z1) enthaltend einen thermoplastischen Kunststoff (P1)
und einen Füllstoff (F1) besteht,
wobei der Füllstoff (F1) faserförmig ist.

2. Ventil gemäß Anspruch 1, wobei der thermoplastischen Kunststoff (P1) ein thermoplastisches Polyurethan ist.

3. Ventil gemäß einem der Ansprüche 1 oder 2, wobei die Zusammensetzung (Z1) den Füllstoff (F1) in einer Menge im Bereich von 5 bis 55 Gew.-% bezogen auf die gesamte Zusammensetzung (Z1) enthält.

4. Ventil gemäß einem der Ansprüche 2 bis 3, wobei das thermoplastische Polyurethan eine Shore Härte im Bereich von 85A bis 85D aufweist.

5. Ventil gemäß einem der Ansprüche 2 bis 4, wobei das thermoplastische Polyurethan ein E-Modul im Bereich von 500 bis 8000 MPa aufweist, bestimmt im Zugversuch gemäß DIN EN ISO 527.

6. Ventil gemäß einem der Ansprüche 2 bis 5, wobei das thermoplastische Polyurethan auf einem aromatischen Isocyanat basiert.

7. Ventil gemäß einem der Ansprüche 1 bis 6, wobei das Ventil einen Ventilfuß aus einem thermoplastischen Material umfasst.

8. Ventilschaft zur Herstellung eines Ventils für einen Fahrzeugreifen, wobei der Ventilschaft rohrfömig ist und aus einer Zusammensetzung (Z1) enthaltend einen thermoplastischen Kunststoff (P1) und einen Füllstoff (F1) besteht,
wobei der Füllstoff (F1) faserförmig ist.

9. Verwendung eines Ventils gemäß einem der Ansprüche 1 bis 7 zur Herstellung eines Formkörpers umfassend einen aufblasbaren Schlauchabschnitt.

10. Verwendung gemäß Anspruch 9, wobei der Formkörper ein Innenschlauch für einen Fahrzeugreifen ist.

11. Verwendung eines Ventils gemäß einem der Ansprüche 1 bis 7 zur Herstellung eines schlauchlosen Fahrradreifens.

12. Formkörper umfassend einen aufblasbaren Schlauchabschnitt und ein Ventil gemäß einem der Ansprüche 1 bis 7, wobei der Schlauchabschnitt und das Ventil über einen Ventilfuß miteinander verbunden sind.

13. Formkörper gemäß Anspruch 12, wobei der Formkörper ein Innenschlauch für einen Fahrzeugreifen ist.

## Claims

1. A tire valve comprising a tubular stem, where the stem consists of a composition (Z1) comprising a thermoplastic (P1) and comprising a filler (F1), where the filler (F1) is fibrous.

2. The valve according to claim 1, where the thermoplastic (P1) is a thermoplastic polyurethane.

3. The valve according to either of claims 1 and 2, where the composition (Z1) comprises, based on the entire composition (Z1), a quantity in the range from 5 to 55% by weight of the filler (F1).

4. The valve according to either of claims 2 and 3, where the Shore hardness of the thermoplastic polyurethane is in the range from 85A to 85D.

5. The valve according to any of claims 2 to 4, where the modulus of elasticity of the thermoplastic polyurethane is in the range from 500 to 8000 MPa, determined in the tensile test in accordance with DIN EN ISO 527.

6. The valve according to any of claims 2 to 5, where the thermoplastic polyurethane is based on an aromatic isocyanate.

7. The valve according to any of claims 1 to 6, where the valve comprises a valve base made of a thermoplastic material.

8. A valve stem for the production of a tire valve, where the valve stem is tubular and consists of a composition (Z1) comprising a thermoplastic (P1) and comprising a filler (F1), where the filler (F1) is fibrous.

9. The use of a valve according to any of claims 1 to 7 for the production of a molding comprising an inflatable tube section.

10. The use according to claim 9, where the molding is an inner tube for a tire.

11. The use of a valve according to any of claims 1 to 7 for the production of a tubeless bicycle tire.

12. A molding comprising an inflatable tube section and a valve according to any of claims 1 to 7, where the tube section and the valve have connection to one another by way of a valve base.

13. The molding according to claim 12, where the molding is an inner tube for a tire.

## Revendications

1. Valve destinée à un pneumatique de véhicule et comprenant une tige tubulaire, la tige étant en une composition (Z1) contenant une matière thermoplastique (P1) et une charge (F1), la charge (F1) se présentant sous forme fibreuse.

2. Valve selon la revendication 1, la matière thermoplastique (P1) étant un polyuréthane thermoplastique.

3. Valve selon l'une des revendications 1 et 2, la composition (Z1) contenant la charge (F1) dans une quantité comprise entre 5 et 55 % en poids par rapport à la composition totale (Z1).

4. Valve selon l'une des revendications 2 et 3, le polyuréthane thermoplastique ayant une dureté Shore comprise entre 85A et 85D.

5. Valve selon l'une des revendications 2 à 4, le polyuréthane thermoplastique ayant un module d'élasticité compris entre 500 et 8000 MPa, déterminé dans un test de traction selon la norme DIN EN ISO 527.

6. Valve selon l'une des revendications 2 à 5, le polyuréthane thermoplastique étant à base d'un isocyanate aromatique.

7. Valve selon l'une des revendications 1 à 6, la valve comprenant une base de valve en matière thermoplastique.

8. Tige de valve destinée à la réalisation d'une valve de pneumatique de véhicule, la tige de valve étant tubulaire et étant en une composition (Z1) contenant une matière thermoplastique (P1) et une charge (F1), la charge (F1) se présentant sous forme fibreuse.

9. Utilisation d'une valve selon l'une des revendications 1 à 7 pour la réalisation d'un corps moulé comprenant une portion de tuyau gonflable.

10. Utilisation selon la revendication 9, le corps moulé étant une chambre à air d'un pneumatique de véhicule.

11. Utilisation d'une valve selon l'une des revendications 1 à 7 pour la réalisation d'un pneumatique de vélo tubeless.

12. Corps moulé comprenant une portion de tuyau gonflable et une valve selon l'une des revendications 1 à 7, la portion de tuyau et la valve étant reliées l'une à l'autre par l'intermédiaire d'une base de valve.

13. Corps moulé selon la revendication 12, le corps moulé étant une chambre à air d'un pneumatique de véhicule.
